(19) Europäisches Patentamt
European Patent Office
Office européen des brevets

(11) Publication number: **0 115 820**
**B1**

# (12) EUROPEAN PATENT SPECIFICATION

(45) Date of publication of patent specification: **21.12.88**

(51) Int. Cl.4: **C 07 D 501/34**, C 07 D 501/36, C 07 D 501/57

(21) Application number: **84100783.4**

(22) Date of filing: **25.01.84**

## (54) Cephalosporin derivatives and process for their preparation.

(30) Priority: **29.01.83 JP 13594/83**
**21.06.83 JP 110238/83**
**02.09.83 JP 160236/83**

(43) Date of publication of application:
**15.08.84 Bulletin 84/33**

(45) Publication of the grant of the patent:
**21.12.88 Bulletin 88/51**

(84) Designated Contracting States:
**AT BE CH DE FR GB IT LI NL SE**

(56) References cited:
**EP-A-0 076 463**
**DE-A-2 738 631**
**FR-A-2 353 557**

**The file contains technical information submitted after the application was filed and not included in this specification**

(73) Proprietor: **Kaken Pharmaceutical Co., Ltd.**
**No. 28-8, Honkomagome 2-chome Bunkyo-ku**
**Tokyo (JP)**

(72) Inventor: **Naito, Takanobu**
**Kaken Pharmaceutical Co. Ltd. No. 28-8, 2-chome**
**Honkomagome Bunkyo-ku Tokyo (JP)**
Inventor: **Yokoyama, Masaaki**
**Kaken Pharmaceutical Co. Ltd. No. 28-8, 2-chome**
**Honkomagome Bunkyo-ku Tokyo (JP)**
Inventor: **Sasaki, Kazuya**
**Kaken Pharmaceutical Co. Ltd. No. 28-8, 2-chome**
**Honkomagome Bunkyo-ku Tokyo (JP)**
Inventor: **Yamamoto, Makoto**
**Kaken Pharmaceutical Co. Ltd. No. 28-8, 2-chome**
**Honkomagome Bunkyo-ku Tokyo (JP)**
Inventor: **Amemiya, Kouji**
**Kaken Pharmaceutical Co. Ltd. No. 28-8, 2-chome**
**Honkomagome Bunkyo-ku Tokyo (JP)**
Inventor: **Azuma, Tsunemasa**
**Kaken Pharmaceutical Co. Ltd. No. 28-8, 2-chome**
**Honkomagome Bunkyo-ku Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 115 820 B1**

(72) Inventor: Sakasai, Masao
Kaken Pharmaceutical Co. Ltd. No. 28-8, 2-chome
Honkomagome Bunkyo-ku Tokyo (JP)

(74) Representative: Wächtershäuser, Günter, Dr.
Tal 29
D-8000 München 2 (DE)

**Description**

The present invention relates to novel cephalosporin derivatives and their salts, and a process for their preparation.

EP—A—76 463 discloses cephalosporin derivatives having good antimicrobial activity. However, stability of the known compounds against an inactivating enzyme is not sufficient.

It is therefore the object of the present invention to provide novel cephalosporin derivatives which have superior antibiotic activities and high stability against an inactivating enzyme.

This object is solved by the present invention by providing novel cephalosporin derivatives represented by the formula

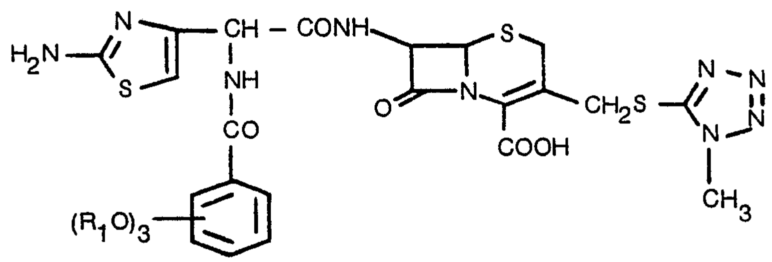

(I)

or a pharmaceutically acceptable salt thereof, wherein $R_1$ is a $C_{1-5}$ alkanoyl group.

In the general formula I, the lower alkanoyl group as $R_1$ is a straight-chained or branched alkanoyl group having at most 5 carbon atoms, such as a formyl group, an acetyl group, a propionyl group, a butyryl group, an isobutyryl group, a valeryl group, an isovaleryl group or a pivalyl group.

The salts of the compounds of the formula I are pharmaceutically acceptable non-toxic salts, such as a sodium salt, a potassium salt, a calcium salt, an ammonium salt, a triethylamine salt, a dicyclohexylamine salt, a procaine salt, an alginine salt, a hydrochloride, a sulfate, an oxalate, a formate, a trichloroacetate, a trifluoroacetate, a methanesulfonate or a toluenesulfonate.

The compounds of the formula I and their salts are novel compounds which have superior antibiotic activities against gram-positive bacteria and gram-negative bacteria. They exhibit particularly strong antibiotic activities against a wide range of gram-negative bacteria including resistant gram-negative bacteria, and thus they are useful as medicines.

Now, the present invention will be described with reference to the preferred embodiments.

As cephalosporin derivative of the present invention, there may be mentioned, for instance, the following specific compound:

7β-[2-(3,4,5-triacetoxybenzoylamino)-2-(2-aminothiazol-4-yl)acetamido]-3-(1-methyl-1H-tetrazol-5-yl-thiomethyl)-3-cephem-4-carboxylic acid.

The compounds of the formula I may be prepared by the following processes.

Process A

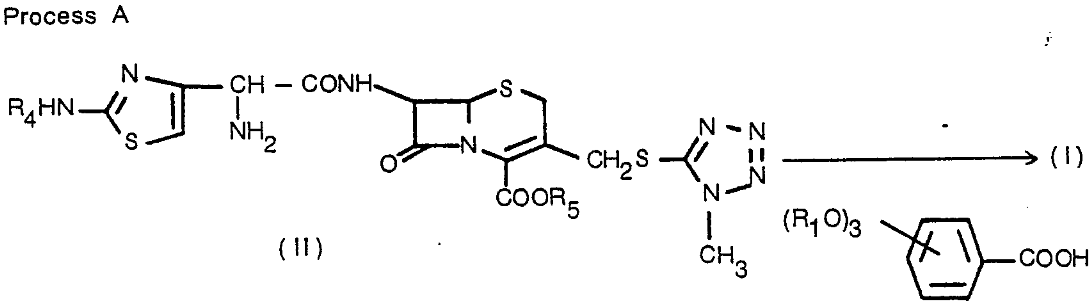

(II) (III) (I)

where $R_4$ is a hydrogen atom or a protective group for the amino group, $R_5$ is a hydrogan atom or a protective group for the carboxyl group, and $R_1$ is as defined above.

Namely, the compound of the formula I of the present invention can be prepared by reacting the compound of the formula II or its salt with the compound of the formula III or its reactive derivative.

In the above reaction, when the compound of the formula III is used in the carboxylic acid form, it is preferred to conduct the reaction in the presence of a dehydrating condensation agent such as N,N'-dicyclohexylcarbodiimide, N,N'-diethylcarbodiimide, N-cyclohexyl-N'-morpholinoethylcarbodiimide, a trialkyl phosphite, ethyl polyphosphate, phosphorus oxychloride or oxalyl chloride. When a reactive derivative of the compound of the formula III is used, there may be employed as such a reactive derivative, an acid halide such as an acid chloride or an acid bromide; a symmetric acid anhydride; a mixed acid

anhydride with chlorocarbonate or a carboxylic acid such as trimethylacetic acid; or an active ester such as N-hydroxysuccinimide or p-nitrophenol.

The above-mentioned N-acylation is usually conducted in an inert solvent in the presence or absence of a basic reagent or a silylating agent at a temperature of from −50 to 50°C, preferably from −20 to 30°C for 5 minutes to 24 hours.

As the inert solvent, there may be mentioned tetrahydrofuran, acetone, dimethylacetamide, dimethylformamide, dioxane, dichloromethane, chloroform, ethyl acetate, benzene or a solvent mixture thereof.

As the basic reagent, there may be mentioned an alkali metal hydroxide such as sodium hydroxide or potassium hydroxide; an alkali metal hydrogencarbonate such as potassium hydrogencarbonate or sodium hydrogencarbonate; or an organic base such as triethylamine, pyridine, dimethylaniline or N-methylmorpholine.

As the silylating agent, there may be mentioned, for instance, N,O-bis(trimethylsilyl)acetamide, hexamethyldisilazane or trimethylsilylacetamide.

As the protective group $R_4$ for the amino group in the formula II, there may be mentioned a formyl group, a chloroacetyl group, a 2,2,2-trichloroethoxycarbonyl group, a t-butoxycarbonyl group, a triphenylmethyl group or a trimethylsilyl group. As the protective group $R_5$ for the carboxyl group, there may be mentioned a t-butyl group, a diphenylmethyl group, a p-nitrobenzyl group, a p-methoxybenzyl group, a trimethylsilyl group or a 2,2,2-trichloroethyl group.

If necessary, after the reaction, the protective groups are removed to obtain the compound of the formula I of the present invention. The steric form about the carbon atom to which the 2-aminothiazole group is bonded in the above formula I, or II, may take a D-form, L-form or a racemic form.

The cephalosporin derivatives of the present invention are novel substances, and the antimicrobial activities of their sodium salts are shown by the minimum inhibitory concentrations (MIC, μg/ml) in Table 1, as compared with a typical known cephalosporin compound.

Table 1 Minimum inhibitory concentration (μg/ml)
[Bacterial suspension: $10^6$ cells/ml]

| Bacteria | Example 1 (Reference) | Example 2 |
|---|---|---|
| Staphylococcus aureus 209 P JC-1 | 0.78 | 0.78 |
| Escherichia coli NIHJ JC-2 | 0.20 | 0.78 |
| Klebsiella pneumoniae No. 42 | 0.1 | <0.05 |
| Proteus vulgaris GN-76 | 0.39 | 0.39 |
| Serratia marcescens No. 16-2 | 6.25 | 0.05 |
| Pseudomonas aeruginosa Y-1 | 0.05 | 0.1 |
| Pseudomonas aeruginosa E-2 | 0.2 | 0.2 |
| Pseudomonas aeruginosa K-13 | 0.2 | 0.2 |

Table 1' Minimum inhibitory concentration (μg/ml)
[Bacterial suspension: $10^6$ cells/ml]

| Bacteria | Test compounds<br>Cefmetazole (Comparative compound) |
|---|---|
| Staphylococcus aureus 209 P JC-1 | 0.39 |
| Escherichia coli NIHJ JC-2 | 0.78 |
| Klebsiella pneumoniae No. 42 | 1.56 |
| Proteus vulgaris GN-76 | 3.12 |
| Serratia marcescens No. 16-2 | >50 |
| Pseudomonas aeruginosa Y-1 | 3200 |
| Pseudomonas aeruginosa E-2 | 3200 |
| Pseudomonas aeruginosa K-13 | 3200 |

Now, the present invention will be described in further detail with reference to Examples. However, it should be understood that the present invention is by no means restricted by these specific Examples.

Example 1 (Reference)

Synthesis of 7β-[DL-2-(3,4-diacetoxybenzoylamino)-2-(2-aminothiazol-4-yl)acetamido]-3-(1-methyl-1H-tetrazol-5-yl-thiomethyl)-3-cephem-4-carboxylic acid

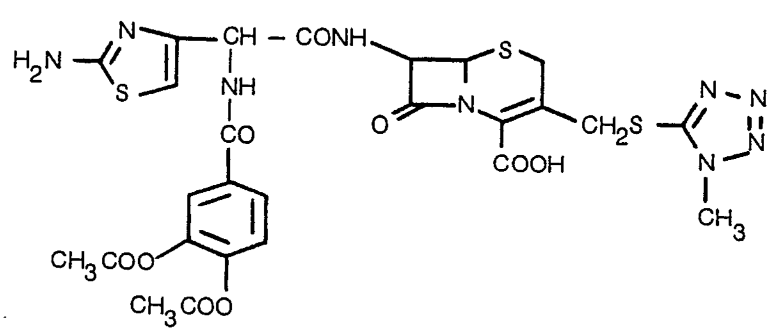

In 8 ml of benzene, 0.476 g of 3,4-diacetoxybenzoic acid was suspended, and after the addition of one drop of dimethylformamide and 0.72 ml of thionyl chloride, refluxed under heating for 1 hour. After the reaction, the solvent was distilled off, and after the addition of 5 ml of benzene, the solvent was again distilled off, whereby 3,4-diacetoxybenzoic acid chloride was obtained. The acid chloride was dissolved in 3 ml of ethyl acetate.

On the other hand, 1.56 g of 7β-[anti-2-methoxyimino-2-(2-chloracetylaminothiazol-4-yl)acetamido]-3-(1-methyl-1H-tetrazol-5-yl-thiomethyl)-3-cephem-4-carboxylic acid benzhydryl ester was dissolved in 30 ml of acetone, and after the addition of 3 ml of water, the solution was cooled to −30°C and 5 ml of methanesulfonic acid was added. While maintaining the temperature at a level of from −35 to −15°C, 1.56 g of zinc dust was added. After the addition, the stirring was continued for 1.5 hours, and then the precipitates were filtered off. The filtrate was poured into an aqueous sodium hydrogen-carbonate solution, then extracted with ethyl acetate and dried over anhydrous magnesium sulfate to obtain an ethyl acetate solution of 7β-[DL-2-amino-2-(2-chloroacetylaminothiazol-4-yl)acetamido]-3-(1-methyl-1H-tetrazol-5-yl-thiomethyl)-3-cephem-4-carboxylic acid benzhydryl ester. To this solution, the ethyl acetate solution of the acid chloride prepared separately as mentioned above, was added and stirred at room temperature for 30 minutes. After the reaction, the reaction solution was washed successively with water, a 1N sodium hydrogencarbonate aqueous solution and a saturated sodium chloride aqueous solution, then dried over anhydrous magnesium sulfate, and concentrated under reduced pressure, and ethyl ether was added, whereby 7β-[DL-2-(3,4-diacetoxybenzolyamino)-2-(2-chloroacetylaminothiazol-4-yl)acetamido]-3-(1-methyl-1H-tetrazol-5-yl-thiomethyl)-3-cephem-4-carboxylic acid benzhydryl ester was precipitated. The precipitates were collected by filtration. The yield was 1.05 g.

IR (KBr): 1780, 1540, 1500, 1375, 1205 $cm^{-1}$

NMR ($CDCl_3$: DMSO-$d_6$ = 4:1) δ:

2.28 (6H, s, 2 × $OCOCH_3$), 3.86 (3H, s, tetrazole 1-$CH_3$), 4.22 (2H, s, $ClCH_2CO$—), 6.89 (1H, s, —$COOCHPh_2$), 7.34 (10H, s, —$COOCHPh_2$)

In 50 ml of ethanol, 3.78 g of 7β-[DL-2-(3,4-diacetoxybenzoylamino)-2-(chloroacetylaminothiazol-4-yl)-acetoamido]-3-(1-methyl-1H-tetrazol-5-yl-thiomethyl)-3-cephem-4-carboxylic acid benzhydryl ester was suspended, and after the addition of 608 mg of thiourea, heated at 60°C for 3 hours. After the reaction, water was added to the reaction solution, and the solution was extracted with ethyl acetate, washed with water, dried over anhydrous magnesium sulfate, and after the removal of solvent by distillation, subjected to silica gel column chromatography, whereby 1.76 g of 7β-[DL-2-(3,4-diacetoxybenzoylamino)-2-(2-aminothiazol-4-yl) acetamido]-3-(1-methyl-1H-tetrazol-5-yl-thiomethyl)-3-cephem-4-carboxylic acid benzhydryl ester was obtained from the eluate with methylene chloride/acetone = 20:1.

IR (KBr): 1785, 1530, 1500, 1375, 1205, 1185 $cm^{-1}$

NMR ($CDCl_3$: DMSO-$d_6$ = 4:1) δ:

2.28 (6H, s, 2 × $OCOCH_3$), 3.83 (3H, s, tetrazole 1-$CH_3$), 6.46 (1H, s, thiazole 5-CH), 6.85 (1H, s, —$COOCHPh_2$), 7.29 (10H, s, —$COOCHPh_2$)

To 2.61 g of 7β-[DL-2-(3,4-diacetoxybenzoylamino)-2-(2-aminothiazol-4-yl)acetamido]-3-(1-methyl-1H-tetrazol-5-yl-thiomethyl)-3-cephem-4-carboxylic acid benzhydryl ester, 20 ml of trifluoroacetic acid and 4 ml of anisole were added and stirred at room temperature for 30 minutes. Then, the reaction solution was concentrated under reduced pressure, and after the addition of ethyl acetate to the residue, dropwise added to ether, whereby a trifluoroacetate of 7β-[DL-2-(3,4-diacetoxybenzoylamino)-2-(2-aminothiazol-4-yl)acetamido]-3-(1-methyl-1H-tetrazol-5-yl-thiomethyl)-3-cephem-4-carboxylic acid was precipitated. The precipitates were collected by filtration. The yield was 2.14 g.

IR (KBr): 1780, 1635, 1370, 1200 $cm^{-1}$

NMR ($CDCl_3$: DMSO-$d_6$ = 2:1) δ:

2.26 (6H, s, 2 × $OCOCH_3$), 3.67 (2H, s, 2-$CH_2$), 3.93 (3H, s, tetrazole 1-$CH_3$), 4.32 (2H, s, 3′-$CH_2S$—), 6.78, 6.86 (1H, each s, thiazole 5-CH)

1.62 g of the trifluoroacetate of 7β-[DL-2-(3,4-diacetoxybenzoylamino)-2-(2-aminothiazol-4-yl)-acetamido]-3-(1-methyl-1H-tetrazol-5-yl-thiomethyl)-3-cephem-4-carboxylic acid was suspended in 5 ml of water, then dissolved by the addition of a 1N sodium hydrogen-carbonate aqueous solution, and subjected to Amberlite® XAD-2 column chromatography, whereby 1.16 g of a sodium salt of 7β-[DL-2-(3,4-diacetoxybenzoylamino)-2-(2-aminothiazol-4-yl)acetamido]-3-(1-methyl-1H-tetrazol-5-yl-thiomethyl)-3-cephem-4-carboxylic acid was obtained from the eluate with ethanol/water = 5/1.

## Example 2

Synthesis of 7β-[DL-2-(3,4,5-triacetoxybenzoylamino)-2-(2-aminothiazol-4-yl)acetamido]-3-(1-methyl-1H-tetrazol-5-yl-thiomethyl)-3-cephem-4-carboxylic acid.

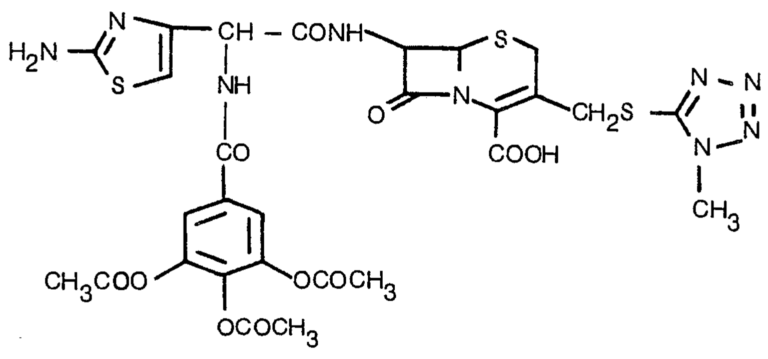

7β-[DL-2-amino-2-(2-chloroacetylaminothiazol-4-yl)-acetamido]cephalosporic acid benzhydryl ester obtained from 3.77 g of 7β-[anti-2-methoxyimino-2-(2-chloroacetylaminothiazol-4-yl)acetamido]-3-(1-methyl-1H-tetrazol-5-yl-thiomethyl)-3-cephem-4-carboxylic acid benzhydryl ester, was reacted with 1.48 g of 3,4,5-triacetoxybenzoic acid in the same manner as in Example 1, whereby 1.40 g of 7β-[DL-2-(3,4,5-triacetoxybenzoylamino)-2-(2-chloroacetylaminothiazol-4-yl)-acetamido]-3-(1-methyl-1H-tetrazol-5-yl-thiomethyl)-3-cephem-4-carboxylic acid benzhydryl ester was obtained.

IR (KBr): 1790, 1550, 1370, 1185 $cm^{-1}$

NMR ($CDCL_3$: DMSO-$d_6$ = 4:1) δ:

2.27 (9H, s, 3 × $OCOCH_3$), 3.84 (3H, s, tetrazole 1-$CH_3$), 4.21 (2H, s, $ClCH_2CO$—), 6.85 (1H, s, —$COOCHPh_2$), 7.10 (1H, s, thiazole 5-CH), 7.30 (10H, s, —$COOCHPh_2$), 7.68 (2H, s, aromatic ring CH)

1.30 g of the above benzohydryl ester was reacted with 0.395 g of thiourea in the presence of 0.13 g of calcium carbonate in the same manner as in Example 1, whereby 720 mg of 7β-[DL-2-(3,4,5-triacetoxybenzoylamino)-2-(2-aminothiazol-4-yl)acetamido]-3-(1-methyl-1H-tetrazol-5-yl-thiomethyl)-3-cephem-4-carboxylic acid benzhydryl ester was obtained.

IR (KBr): 1785, 1525, 1375, 1190 $cm^{-1}$

NMR ($CDCl_3$) δ:

2.23 (9H, s, 3 × $OCOCH_3$), 3.79 (3H, s, tetrazole 1-$CH_3$), 6.38, 6.43 (1H, each s, thiazole 5-CH), 6.90 (1H, s, —$COOCHPh_2$), 7.32 (10H, s, —$COOCHPh_2$), 7.65 (2H, s, aromatic ring CH)

To 670 mg of the above benzhydryl ester, 2 ml of anisole and 10 ml of trifluoroacetic acid were added and reacted in the same manner as in Example 1, whereby 568 mg of a trifluoroacetate of 7β-[DL-2-(3,4,5-triacetoxybenzoylamino)-2-(2-aminothiazol-4-yl)acetamido]-3-(1-methyl-1H-tetrazol-5-yl-thiomethyl)-3-cephem-4-carboxylic acid was obtained.

IR (KBr): 1770, 1630—1690, 1370, 1190 $cm^{-1}$

NMR ($CDCL_3$: DMSO-$d_6$ = 4:1) δ:

2.28 (9H, s, 3 × $OCOCH_3$), 3.65 (2H, s, 2-$CH_2$), 3.92 (3H, s, tetrazole 1-$CH_3$), 4.35 (2H, s, 3'-$CH_2S$—), 6.74 (1H, s, -thiazole-5-CH), 7.76 (2H, s, aromatic ring CH) 467 mg of the trifluoroacetate thus obtained was dissolved in an aqueous sodium hydrogen carbonate solution and purified by Amberlite® XAD-2 column chromatography in the same manner as in Example 1, whereby 335 mg of a sodium salt was obtained.

## Claims

1. A cephalosporin compound represented by the formula

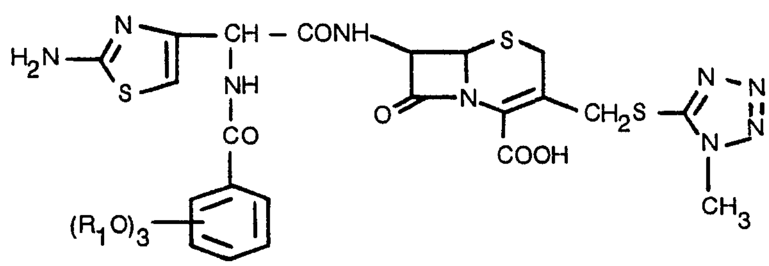

(I)

or a pharmaceutically acceptable salt thereof, wherein $R_1$ is a $C_{1-5}$ alkanoyl group.

2. The cephalosporin derivative according to claim 1, which is 7β-[DL-2-(3,4,5-triacetoxybenzoylamino)-2-(2-aminothiazol-4-yl)acetamido]-3-(1-methyl-1H-tetrazol-5-yl-thiomethyl)-3-cephem-4-carboxylic acid represented by the formula

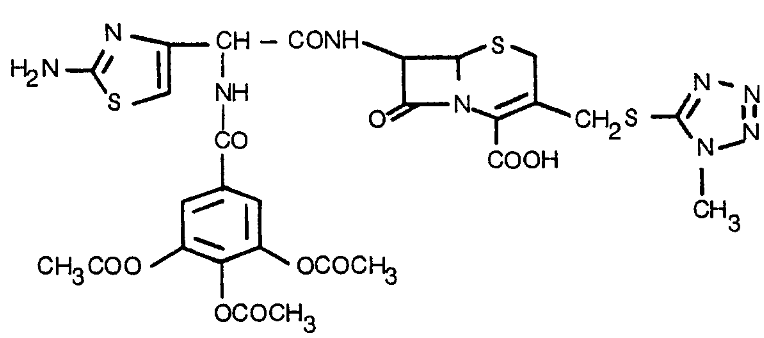

or a pharmaceutically acceptable salt thereof.

3. A process for preparing a cephalosporin compound represented by the formula

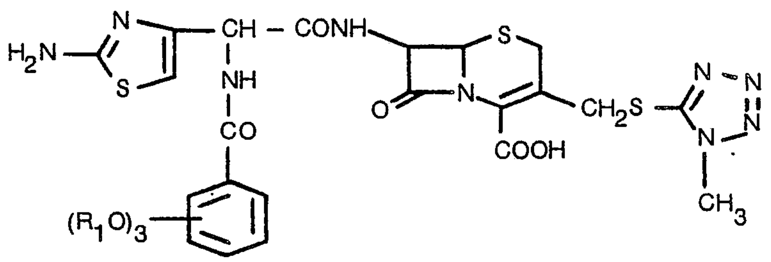

(I)

wherein $R_1$ is a $C_{1-5}$-alkanoyl group or a pharmaceutically acceptable salt thereof, characterized in that a compound represented by the formula

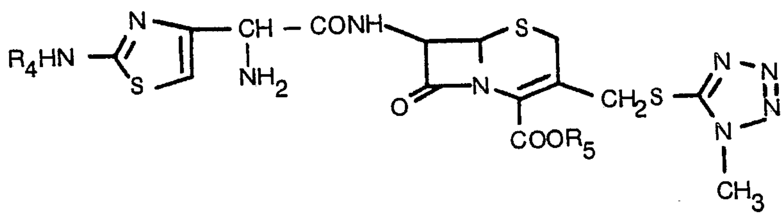

where $R_4$ is a hydrogen atom or a protective group for the amino group and $R_5$ is a hydrogen atom or a protective group for the carboxyl group, is reacted with a compound of the formula

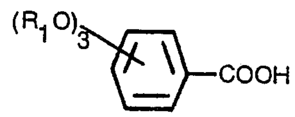

(III)

where $R_1$ is as defined above, or a reactive derivative thereof, and optionally removing the protective groups of the resulting compound and converting the compound to its salt.

**Patentansprüche**

1. Cephalosporinverbindung der Formel

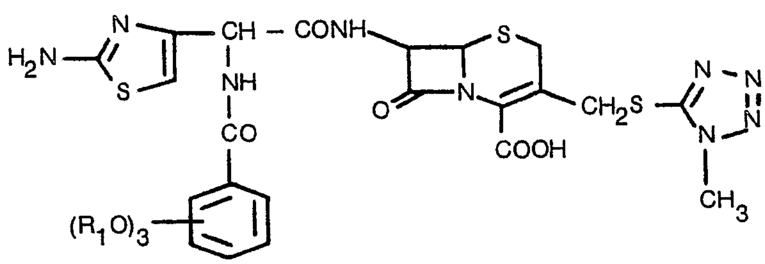

(I)

oder ein pharmazeutisch akzeptables Salz derselben, wobei $R_1$ für eine $C_{1-5}$-Alkanoylgruppe steht.

2. Cephalosporinderivat gemäß Anspruch 1, nämlich 7β-[DL-2-(3,4,5-Triacetoxybenzoylamino)-2-(2-aminothiazol-4-yl)acetamido]-3-(1-methyl-1H-tetrazol-5-yl-thiomethyl)-3-cephem-4-carbonsäure der Formel

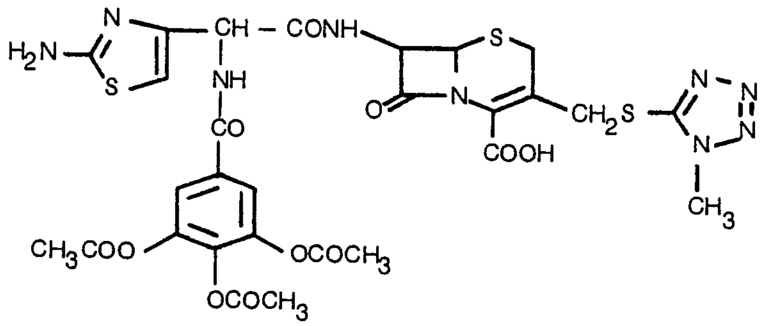

oder ein pharmazeutisch akzeptables Salz derselben.

3. Verfahren zur Herstellung einer Cephalosporinverbindung der Formel

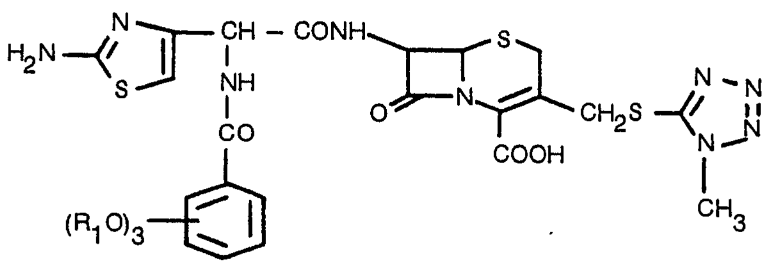

(I)

wobei $R_1$ für eine $C_{1-5}$-Alkanoylgruppe steht, oder eines pharmazeutisch akzeptablen Salzes derselben, dadurch gekennzeichnet, daß man eine Verbindung der Formel

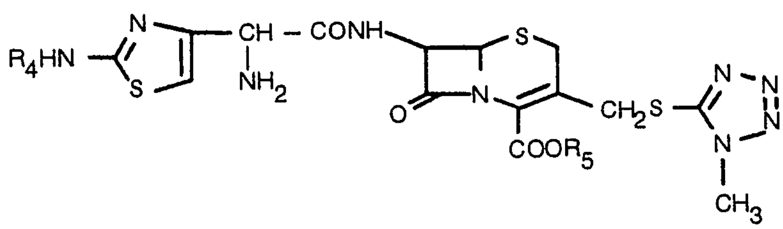

wobei $R_4$ für ein Wasserstoffatom oder eine Schutzgruppe für die Aminogruppe steht und $R_5$ für ein Wasserstoffatom oder eine Schutzgruppe für die Carboxylgruppe steht, mit einer Verbindung der Formel

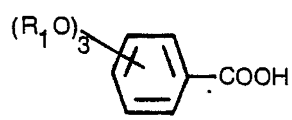

(III)

wobei $R_1$ wie oben definiert ist, oder mit einem reaktiven Derivat derselben, umsetzt und gegebenenfalls die Schutzgruppen von der resultierenden Verbindung entfernt und die Verbindung in ihr Salz umwandelt.

**Revendications**

1. Dérivé de céphalosporine représenté par la formule:

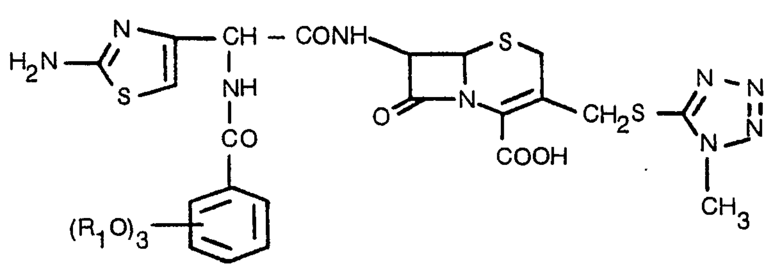

(I)

ou sel pharmaceutiquement acceptable de ce dérivé, $R_1$ représentant un groupe alcanoyle en $C_{1-5}$.

2. Dérivé de céphalosporine selon la revendication 1 qui est l'acide [DL-(triacétoxy-3,4,5 benzoyl-amino)-2 (amino-2 thiazolyl-4)-2 acétamido]-7β (méthyl-1 1H-tétrazolyl-5 thiométhyl)-3 céphem-3 carboxylique-4, représenté par la formule:

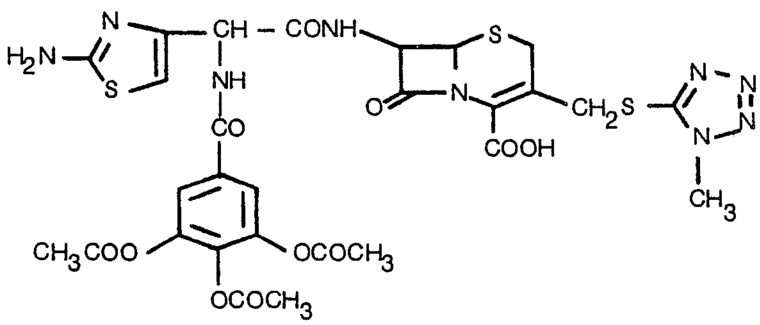

ou sel pharmaceutiquement acceptable de ce dérivé.

3. Procédé de préparation d'un dérivé de céphalosporine représenté par la formule:

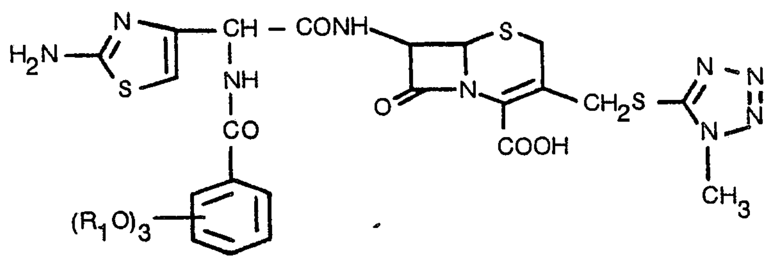

(I)

où $R_1$ est un groupe alcanoyle en $C_{1-5}$,

ou d'un sel pharmaceutiqement acceptable de ce dérivé, caractérisé par le fait que l'on fait réagir un composé représenté par la formule:

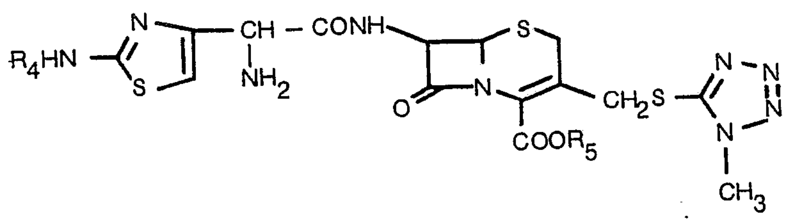

où:

— $R_4$ est un atome d'hydrogène ou un groupe protecteur du groupe amino; et
— $R_5$ est un atome d'hydrogène ou un groupe protecteur du groupe carboxyle,

avec un composé de formule:

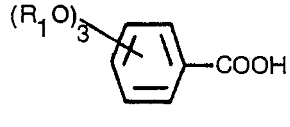

(III)

où $R_1$ est tel que défini ci-dessus, ou un dérivé réactif de ce composé; et facultativement, élimination des groupes protecteurs du composé résultant, et conversion du composé en l'un de ses sels.